# FASCICULE DE BREVET EUROPEEN

(11) **EP 2 231 429 B1**
(45) Date de publication et mention de la délivrance du brevet: **29.03.2017**
(21) Numéro de dépôt: 08858466.9
(22) Date de dépôt: 10.12.2008
(51) Int. Cl.: B60J 1/16, E05D 15/10, E05C 19/00

(54) **DISPOSITIF D'OBTURATION D'UNE BAIE MENAGEE DANS LA CARROSSERIE D'UN VEHICULE, A ELEMENT DE GUIDAGE ET COULISSEAU FORMANT NAVETTE, ET VEHICULE CORRESPONDANT**
ABSCHLUSSVORRICHTUNG FÜR EINE ÖFFNUNG IN EINER FAHRZEUGKAROSSERIE, MIT DURCH FÜHRUNGSELEMENT UND SCHLITTEN GEBILDETER FÄHRE, UND ENTSPRECHENDES KRAFTFAHRZEUG
DEVICE FOR CLOSING OFF AN OPENING FORMED IN THE BODYWORK OF A VEHICLE, WITH A GUIDE ELEMENT AND SLIDE FORMING A SHUTTLE, AND CORRESPONDING VEHICLE

(30) Priorité: 10.12.2007 FR 0759704; 22.05.2008 FR 0853342
(43) Date de publication de la demande: 29.09.2010
(73) Titulaire: Advanced Comfort Systems France SAS - ACS France, 79302 Bressuire Cedex (FR)
(72) Inventeur: GIRET, Frédéric, F-79300 Bressuire (FR); GERBEAU, Serge, F-79300 Saint-Sauveur (FR); NEAUX, Jean-Claude, F-79300 Terves (FR); GERARD, Yvan, F-49800 Trelaze (FR)
(74) Mandataire: Vidon Brevets & Stratégie
(86) Numéro de dépôt international: PCT/EP2008/067264
(87) Numéro de publication internationale: WO 2009/074625

(56) Documents cités:
- FR-A- 2 833 209
- US-A1- 2007 234 644

## Description

### 1. Domaine de l'invention

Le domaine de l'invention est celui des baies de véhicules automobiles. Plus précisément, l'invention concerne les dispositifs d'obturation d'une baie ménagée dans la carrosserie d'un véhicule, ou dans une portière du véhicule, et comprenant une partie mobile coulissante susceptible de libérer ou de fermer une ouverture.

### 2. Techniques de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture d'une vitre de portière est de rendre celle-ci mobile verticalement dans son propre plan, en la faisant pénétrer ou sortir du caisson ou de la garniture de la portière. On connaît également des panneaux coulissants horizontalement, le long de rails formés dans un cadre.

Cette technique est aujourd'hui couramment utilisée et des solutions pour l'automatiser sont connues. L'équipement des automobiles en vitres électriques est aujourd'hui très répandu.

Cette technique présente cependant de nombreux inconvénients relatifs, notamment, aux problèmes d'étanchéité.

Une autre technique a été proposée par le titulaire de la présente demande de brevet. Cette technique est notamment décrite dans les documents de brevet EP-0 778 168 et EP-0 857 844. Le dispositif d'obturation (appelé par la suite "baie flush") présenté dans ces documents comprend une structure fixe et une partie, ou panneau coulisseau, mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle baie flush peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP-1 022 172. On résout ainsi la plupart des problèmes d'étanchéité identifiés plus haut.

Sur le plan esthétique, la baie flush présente, vue de l'extérieur, un aspect lisse, affleurant, du fait qu'aucun cadre n'est nécessaire sur le contour de l'ouverture formée dans l'ensemble fixe.

Pour assurer un coulissement de la partie mobile, constituée généralement par un panneau transparent, on prévoit par exemple un dispositif de guidage comportant un premier et un second rail de guidage montés fixes sur l'ensemble fixe (ou structure fixe) de la baie, de part et d'autre de l'ouverture fermée par le panneau mobile. Celui-ci est monté sur les rails, pour coulisser par exemple selon une direction longitudinale, dans un plan de coulissement entre une (ou plusieurs) position d'ouverture et une position intermédiaire de dégagement dans laquelle il est en regard de la baie et dégagé de celle-ci.

On notera qu'il a été envisagé de déplacer la partie mobile entre la position d'obturation et la position intermédiaire de dégagement suivant principalement deux techniques :
- une première technique pour laquelle le déplacement de la partie mobile est une combinaison d'un mouvement dans une direction parallèle au plan de la partie fixe et d'un mouvement dans une direction perpendiculaire à ce plan, sous la forme d'un mouvement général de louvoiement, selon lequel le bord distal de la partie mobile se trouve, en fin de course, dans le plan de la baie (la partie mobile étant alors « en travers », entre le plan d'obturation et le plan de coulissement). Il suffit alors de ramener le bord proximal, par exemple manuellement, pour assurer l'obturation ; et
- une deuxième technique pour laquelle la partie mobile reste constamment dans un plan sensiblement parallèle au plan de la partie fixe lors de son déplacement.

L'invention se rapporte plus particulièrement à cette deuxième technique d'obturation, à ses variantes et ses perfectionnements. Plus précisément, les inventeurs visent par la présente à proposer au moins une technique inédite de guidage et de verrouillage de telles « baies flush ». Toutefois, l'invention peut de façon plus large s'appliquer à tous les dispositifs d'obturation dont la cinématique d'ouverture et/ou de fermeture inclut un déplacement (en y) entre une position d'ouverture et une position intermédiaire de dégagement, dans un plan parallèle au plan de l'ensemble fixe, et un déplacement (en x) dans ce plan parallèle.

### 3. Inconvénients des solutions de l'art antérieur

On connaît, par exemple du document FR-2 833 209 du même Déposant que la présente demande et qui divulgue les caractéristiques du préambule de la revendication 1, une technique de guidage d'un panneau mobile de « baie flush » dans des rails mettant en oeuvre des pions de guidage circulant dans des gorges non rectilignes formées dans des rails. Un inconvénient de cette technique est que la mise en oeuvre des rails est complexe.

Un autre inconvénient de cette technique est que les rails sont parfois d'épaisseur importante pour permettre de guider les pions de façon satisfaisante, ce qui peut nuire au clair de baie.

Par ailleurs, au regard de l'opération de verrouillage des baies flush, plusieurs solutions ont été proposées pour verrouiller le ou les panneau(x) coulissant(s) dans la position d'obturation de l'ouverture prévue dans la baie, et le cas échéant dans des positions d'ouverture choisies.

Parmi celles-ci, on connaît une technique présentée dans le document EP-1 659 247, selon laquelle on prévoit au moins un pêne coopérant avec une gâche formée dans un des rails perpendiculairement à l'axe de coulissement de ce rail, le passage d'une position verrouillée à une position déverrouillée résultant du déplacement du panneau coulissant d'un premier plan vers un second plan sensiblement dans la direction perpendiculaire à l'axe du rail.

Un inconvénient de ces techniques de l'art antérieur est qu'il est nécessaire de procéder à un effort, par exemple de serrage, pour immobiliser le panneau dans une position verrouillée, ce qui n'est pas pratique et est parfois peu efficace. Ceci rend par ailleurs ces techniques complexes, puisqu'il est nécessaire de prévoir des moyens de blocage complémentaires pour verrouiller efficacement le panneau coulissant.

Un autre inconvénient de ces techniques de l'art antérieur est qu'elles ne permettent pas, ou n'offrent pas de solution simple ou efficace, pour arrêter le coulissement du panneau en toute position d'ouverture totale ou intermédiaire.

### 4. Objectifs de l'invention

L'invention a donc notamment pour objectif de pallier les inconvénients de l'art antérieur cités ci-dessus.

Plus précisément, l'invention a pour objectif de proposer une technique de mise en mobilité d'un panneau coulissant d'un dispositif d'obturation d'une baie suivant les directions x (selon la longueur du véhicule) et y (selon la largeur du véhicule) d'un même plan (sans décalage en z (selon la hauteur du véhicule)), qui permette de simplifier les opérations de verrouillage et de déverrouillage de celui-ci en position fermée et en toute position d'ouverture.

L'invention a également pour objectif de fournir un tel dispositif dont les rails sont de forme simple et peuvent donc être fabriqués aisément et à moindre coût.

Un autre objectif de l'invention est de fournir un tel dispositif d'obturation d'une baie qui permette un coulissement fiable et sans effort et dont la manoeuvre peut être aisément et efficacement motorisée.

Ainsi, un objectif particulier de l'invention est de fournir un tel dispositif, qui permette de commander facilement le coulissement du panneau mobile, quel que soit le sens de déplacement (ouverture ou fermeture), tout en conservant des sécurités quant à sa manipulation, par un enfant en bas âge par exemple.

L'invention a encore pour objectif de fournir un tel dispositif d'obturation d'une baie qui assure un enchâssement complet du panneau dans la baie lors d'une manoeuvre de fermeture.

Un autre objectif de l'invention est de fournir un tel dispositif d'obturation d'une baie qui soit simple à monter sur une portière ou sur une paroi d'un véhicule, et qui permette une utilisation aisée et fiable.

Encore un autre objectif de l'invention est de fournir un tel dispositif d'obturation d'une baie qui conserve l'ensemble des avantages des "baies flush" déjà développées par le titulaire de la présente demande, et notamment :
- aspect esthétique affleurant ;
- aspects aérodynamiques ;
- facilité et coût réduit de fabrication ;
- facilité et coût réduit de montage.

### 5. Principes généraux de l'invention

Ces objectifs ainsi que d'autres qui apparaîtront par la suite, sont atteints à l'aide d'un dispositif d'obturation selon la revendication 1.

Ainsi, un tel dispositif propose de solidariser le panneau coulissant directement à un élément de guidage et à au moins un coulisseau, par l'intermédiaire de pions de guidage, guidés dans un chemin de rail de forme simple, sensiblement rectiligne, afin d'assurer sa mise en mobilité dans la direction de l'axe de coulissement ou perpendiculairement au plan de la structure fixe.

On notera que le terme « plan » doit ici s'entendre dans une acception élargie : le plan formé par la baie est parfois courbe, selon une, voire deux, directions (cela justifie également, dans certains cas, le terme « sensiblement »).

Ce dispositif permet donc avantageusement de faire reposer le panneau coulissant sur une surface élargie du rail, par l'intermédiaire de l'élément de guidage et du coulisseau et de mettre en oeuvre des rails d'épaisseur réduite correspondant sensiblement à l'épaisseur du coulisseau ou de l'élément de guidage et/ou à l'épaisseur prévue pour le collage du rail sur la structure fixe.

Par ailleurs, grâce aux gorges de guidage du dispositif selon l'invention, le panneau coulissant peut être déplacé par rapport au plan de la structure fixe en restant en permanence parallèle à ce plan, et les portions inclinées de ces gorges permettent que la transition entre une position de coulissement et la position
d'obturation du panneau s'opère progressivement, sans changement brusque de direction.

L'angle peut notamment être de l'ordre de 45°, ce qui permet de décaler, ou inversement de rapprocher, le panneau coulissant par rapport au plan structure fixe, lorsqu'il est en regard de l'ouverture, suivant une direction perpendiculaire à ce plan, ce qui présente un avantage au plan esthétique.

Le rail comprend au moins une gâche de verrouillage, apte à coopérer avec un desdits pions de guidage dans ladite position d'obturation.

Ainsi on peut verrouiller le panneau coulisseau dans la position d'obturation sans cisailler les joints d'étanchéité du panneau coulissant.

Il est à noter que dans d'autres modes de réalisation de l'invention, la gâche peut être distincte du rail et/ou on peut prévoir des gâches sur chacun des deux rails, disposées en vis-à-vis.

De façon préférentielle, ledit élément de guidage chevauche au moins une partie dudit coulisseau.

Ainsi, on réduit l'encombrement des parties mobiles du dispositif d'obturation dans la direction de l'axe de coulissement.

Dans au moins un mode de réalisation de l'invention, lesdits moyens de rappel comprennent un ressort hélicoïdal monté entre ledit élément de guidage et ledit coulisseau et s'étendant parallèlement audit axe de coulissement.

D'autres moyens de rappel peuvent également être envisagés, tels que par exemple un ressort spiral, une lame ressort, ...

Selon un aspect avantageux de l'invention, un tel dispositif comprend une poignée solidaire du ou desdits coulisseaux, et mobile par rapport audit cadre.

Ainsi, on peut aisément manoeuvrer ou déplacer le ou les coulisseaux, logés à l'intérieur des rails, par rapport au cadre.

Préférentiellement, ladite poignée est mobile dans une direction parallèle audit axe de coulissement.

Ainsi la poignée et les coulisseaux auxquels elle est solidarisée peuvent être déplacés dans un chemin de rail rectiligne orienté suivant l'axe de coulissement. Par ailleurs, le mouvement du panneau coulissant par rapport à la poignée est facilité lors du passage du panneau coulissant de la position d'obturation à la position de coulissement, dans lequel il s'est déplacé suivant la direction perpendiculaire au plan de la structure fixe, puisque la poignée n'est pas libre de bouger dans cette dernière direction.

Selon un mode de réalisation avantageux de l'invention, ladite poignée relie un coulisseau supérieur, mobile dans un rail de guidage supérieur, et un coulisseau inférieur, mobile dans un rail inférieur.

Ainsi, on obtient un dispositif symétrique.

Selon un aspect préférentiel de l'invention, lesdits pions de guidage n'étant pas logés dans lesdites gâches, lesdits pions de guidage viennent frotter contre un bord dudit rail lorsque la poignée n'est pas actionnée.

Ainsi, le panneau coulissant peut être immobilisé simplement et efficacement en toute position intermédiaire de coulissement en relâchant la poignée, le frottement des pions de guidage le long du rail empêchant le glissement de ce panneau.

Selon un aspect particulier de l'invention, ladite poignée comprend un cache de masquage de l'espace entre ladite poignée et ledit cadre dudit panneau coulissant.

Ainsi, seul le second cadre est visible de l'intérieur du véhicule, ce qui améliore l'effet esthétique lié au coulissement du panneau.

De façon préférentielle, ladite poignée et ledit ou lesdits coulisseaux définissent un second cadre superposé audit cadre.

Ainsi, on simplifie le dispositif.

Selon un aspect particulier de l'invention, ledit second cadre comprend au moins une lumière associée à chacun desdits pions de guidage de façon à permettre d'entraîner le panneau coulissant suivant une direction perpendiculaire au plan de ladite structure fixe, et des moyens de solidarisation avec ledit élément de guidage.

Avantageusement, ledit cadre comprend au moins un élément de retenue apte à venir en appui sur une face interne dudit rail de façon à empêcher le basculement dudit cadre autour d'un axe perpendiculaire au plan dudit panneau coulissant.

On peut notamment prévoir de disposer un élément de retenue de grande extension ou deux éléments de retenue à chaque extrémité de la bordure du cadre en regard d'un des rails de façon à autoriser un jeu fonctionnel plus important entre le ou les éléments de retenue et ce rail.

Il peut en outre être envisagé de motoriser le déplacement du panneau coulissant entre la position d'obturation et ladite position de coulissement et/ou l'actionnement de la poignée.

Selon un aspect particulier de l'invention, un dispositif tel que décrit ci-dessus peut comprendre à cet effet des moyens de motorisation dudit panneau coulissant. Ainsi, on peut commander à distance le passage du panneau coulissant de la position d'obturation à la position de coulissement (ouverture du panneau), et vice-versa.

De façon avantageuse, lesdits moyens de motorisation comprennent un câble solidaire d'au moins un bord dudit cadre et actionné par un moto-réducteur, une portion dudit câble étant sensiblement parallèle audit axe de coulissement, et des moyens de contrôle de la variation de la longueur déroulée dudit câble.

Ainsi, on limite la puissance du moto-réducteur à mettre en oeuvre et on réduit l'encombrement des moyens de motorisation. D'autre part, le déplacement du panneau coulissant perpendiculairement au plan de la structure fixe est permis par la libération d'une longueur supplémentaire de câble.

Dans au moins un mode de réalisation particulier de l'invention, ledit ou lesdits rails de guidage définissent un arc de cercle, de façon à guider ledit panneau coulissant en pivotement autour d'un axe de pivotement perpendiculaire audit plan de coulissement, dans ladite position de coulissement, ledit ou lesdits coulisseaux et ledit élément de guidage présentent un profil courbe correspondant sensiblement à la courbure desdits rails.

L'invention concerne également un véhicule automobile comprenant au moins un dispositif d'obturation d'une baie tel que décrit ci-dessus.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A et 1B illustrent, dans une représentation en perspective, un mode de réalisation d'un dispositif d'obturation selon l'invention respectivement en position d'obturation de l'ouverture et dans une position d'ouverture partielle ;
- la figure 2 est une vue de détail de la partie inférieure du dispositif d'obturation présenté en figures 1A et 1B ;
- la figure 3 présente la solidarisation de la poignée avec les coulisseaux inférieur et supérieur du dispositif des figures 1A et 1B;
- la figure 4 est une vue en coupe de la solidarisation de l'élément solidaire avec le cadre du panneau coulissant du dispositif présenté en figures 1A et 1B ;
- les figures 5 à 8 sont des vues successives de dessus de la zone du patin du coulisseau inférieur du dispositif présenté en figures 1A et 1B lorsque le panneau coulissant du dispositifs des figures 1A et 1B est entraîné de la position d'obturation jusqu'à une position de coulissement intermédiaire;
- les figures 9A et 9B illustrent le détail du système de retenue empêchant le basculement du panneau coulissant du dispositif de la figure 1, respectivement dans une vue de face et suivant une coupe transversale ;
- la figure 10 est une représentation d'un autre mode de réalisation de l'invention, dans lequel la poignée est intégrée à un second cadre ;
- les figures 11A et 11B illustrent un autre mode de réalisation de l'invention dans lequel le panneau coulissant est motorisé, respectivement suivant une vue d'ensemble du dispositif d'obturation selon l'invention, et suivant une vue de détail de la zone du bloc d'entraînement du cadre du panneau coulissant ;
- la figure 12 est une représentation d'un mode de réalisation de l'invention dans lequel la structure fixe porte deux rails de guidage concentriques en arc de cercle pour permettre un pivotement du panneau coulissant lors de son coulissement.

### 7. Description d'un mode de réalisation particulier de l'invention

Comme déjà indiqué, le principe général de l'invention repose notamment sur la mise en oeuvre d'au moins un coulisseau d'entraînement de deux pions de guidage solidaires du panneau coulissant et d'un élément de guidage du panneau guidés suivant l'axe du rail, et mobiles l'un par rapport à l'autre pour permettre le déplacement du panneau coulissant dans la direction perpendiculaire au plan de la structure fixe.

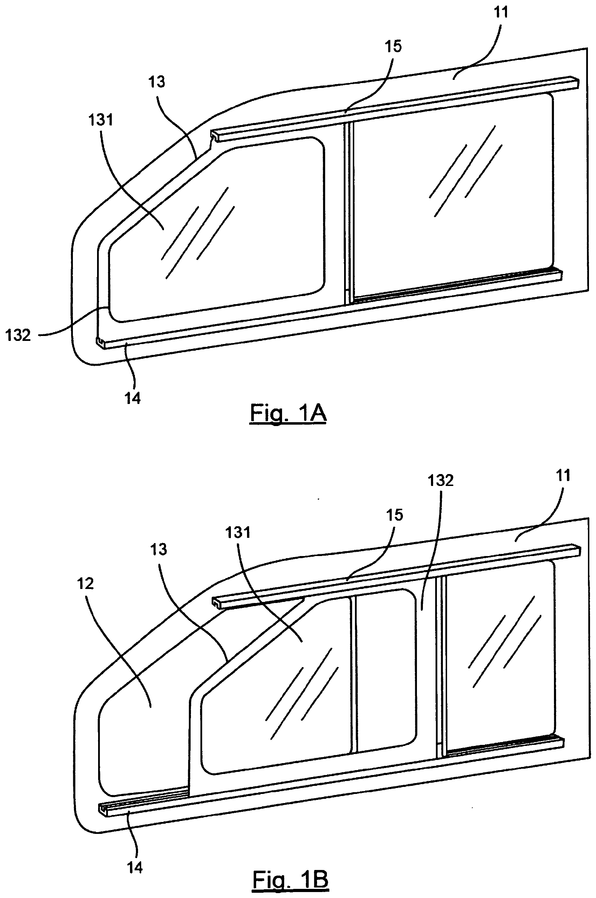

Les figures 1A et 1B illustrent, dans une vue en perspective, un mode de réalisation d'un dispositif selon l'invention à ouverture manuelle, destiné à obturer une baie ménagée dans une paroi latérale de la carrosserie d'un véhicule. Ce dispositif d'obturation comprend une structure fixe 11 en matériau transparent, encore appelée ensemble fixe ou panneau fixe, dans laquelle est percée une ouverture 12, et un panneau coulissant 13 mobile par rapport à cette structure fixe, permettant d'obturer complètement l'ouverture (voir figure 1A), et prévu pour coulisser et libérer partiellement (voir figure 1B) ou totalement cette ouverture.

Le panneau coulissant comprend une vitre 131 munie d'un cadre 132, pouvant être guidé le long de deux rails sensiblement parallèles 14 et 15, montés sur la face intérieure de la structure fixe 11 respectivement en partie inférieure et en partie supérieure.

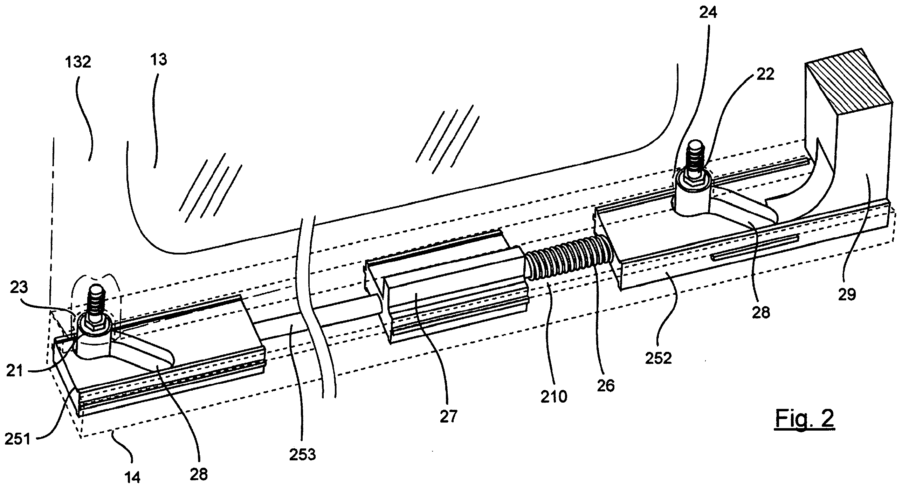

La figure 2 illustre le détail de la partie inférieure du dispositif d'obturation présenté en figure 1A en position d'obturation, dans lequel le cadre 132 du panneau coulissant et le rail 14 sont représentés en traits pointillés, la partie supérieure pouvant être déduite par simple symétrie.

Le panneau coulissant 13 présente dans sa partie inférieure deux pions de guidage 21 et 22, fixés au cadre 132 dans ce mode de réalisation de l'invention. Dans la position d'obturation de l'ouverture représentée sur cette figure, les pions 21 et 22 coopèrent avec deux gâches traversantes identiques 23 et 24 formées dans l'épaisseur du rail 14 pour assurer le verrouillage du panneau coulissant 13.

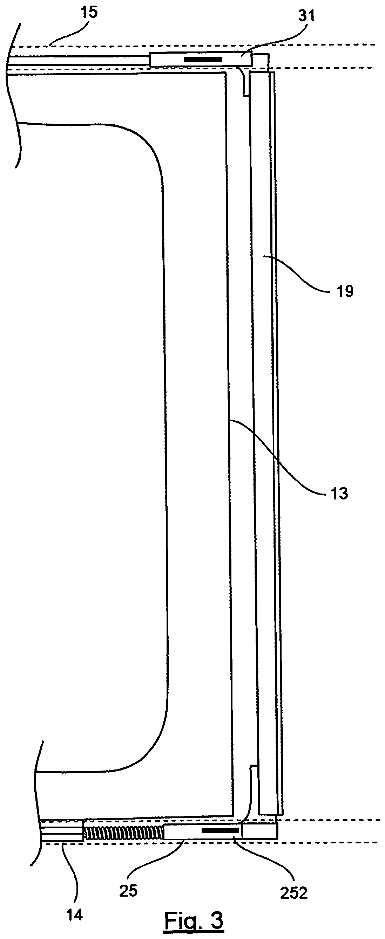

Un coulisseau 25, formant navette au regard de la position du panneau coulissant 13, est logé dans la glissière interne du rail 14, sensiblement à l'aplomb du panneau coulissant. Il comprend deux patins de guidage 251 et 252, liés rigidement par une barre de liaison 253. Le patin 252 est solidaire d'une poignée 29. Elle s'entend le long du bord vertical du cadre 132 et relie le coulisseau inférieur 25 au coulisseau supérieur 31 (voir la figure 3), mobile dans le rail 15, au travers d'une rainure rectiligne 210 orientée suivant l'axe du rail 14, communicant à angle droit avec les gâches 23 et 24. De façon à faciliter sa préhension, elle présente sensiblement dans sa partie centrale une zone de saisie ergonomique.

Un ressort hélicoïdal de rappel 26, monté autour de la barre 253, est logé entre le patin 252 du coulisseau et un élément 27 solidaire du cadre 132.

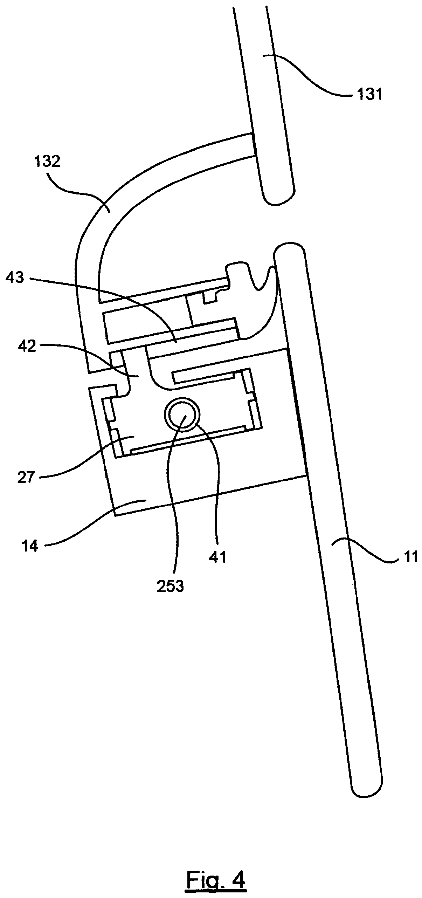

Cet élément 27 mobile par rapport à la barre 253, qu'il chevauche, peut coulisser dans la glissière du rail 14. Comme illustré dans une vue en coupe sur la figure 4, il comprend un orifice 41 pour coulisser librement le long de la barre 253 et un ergot 42 mobile dans une gorge 43 du cadre 132 suivant la direction perpendiculaire au plan du panneau coulissant 13, empêchant son coulissement dans le rail, lorsque le panneau n'est pas libre de coulisser suivant la direction de l'axe du rail 14.

Une gorge de guidage 28 est formée dans chacun des patins 251, 252 pour recevoir la base de chaque pion 21, 22, débouchant sous la gâche.

Dans la position représentée sur la figure 2, la poignée 29 est relâchée. L'action du ressort 26 a repoussé le patin 252 vers la droite, le fond de la gorge 28 venant en butée sur les pions 21, 22. Chaque pion 21, 22 est alors immobilisé, la sortie de gâche étant disposée perpendiculairement à la direction de circulation dans la gorge.

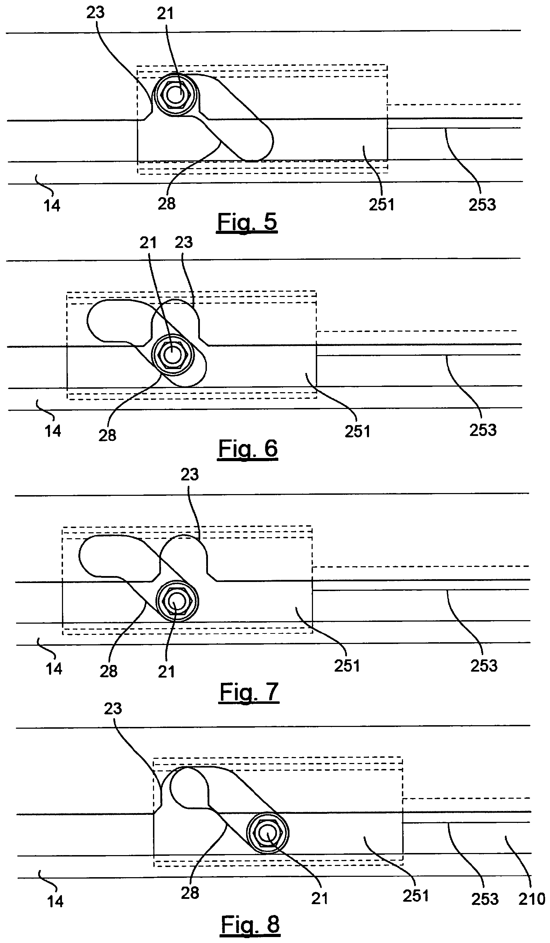

Les figures 5 à 8 présentent, dans une vue de dessus de la zone du patin 251, les positions successives occupées par le pion 21 lorsque le panneau 13 est déplacé, en actionnant manuellement la poignée 29, de la position d'obturation à une position de coulissement, après avoir été dégagé du plan de la structure fixe 11.

Sur la figure 5, le panneau 13 est dans la position d'obturation de l'ouverture et le pion 21 est logé dans la gâche 23. La poignée ayant été pressée vers la gauche suivant l'axe du rail 14, s'est déplacée dans le rail 14 et la rainure 210, et a repoussé le patin 252, et donc le patin 251, dans cette même direction en comprimant le ressort 26 qui est bloqué contre l'élément 27 solidaire du panneau 13. Lors de la première phase de déplacement du patin 25, le pion 21, demeuré immobile, se retrouve à l'extrémité de la portion rectiligne tournée vers l'extérieur 41 de la gorge 28, comme illustré sur la figure 5, et peut alors être libéré de la gâche 23.

Lorsqu'à partir de la position présenté sur la figure 5, le patin 251 progresse vers la gauche, le pion 21 qui est guidé dans la portion inclinée d'un angle de 45° par rapport à l'axe du rail de la gorge 28, est extrait de la gâche 23 et est progressivement repoussé vers l'intérieur du véhicule, comme illustré sur successivement par les figures 6 et 7.

Il convient de noter qu'en raison du choix particulier d'un angle de la portion inclinée égal à 45°, les pions 21 et 22 se déplacent dans la direction perpendiculaire au plan de la structure fixe, en entraînant le panneau 13, ce qui procure au mouvement de dégagement du panneau coulissant un effet esthétique appréciable. L'élément 27 reste alors maintenu immobile par le panneau 13 dans le rail 14, ce qui permet de déplacer le panneau sans à-coup, en augmentant progressivement l'intensité de la pression sur la poignée.

Dans des variantes de ce mode de réalisation, il peut cependant être envisagé de prévoir un angle compris entre 1° et 89° et différent de 45 ° pour la portion inclinée de la gorge.

Dans la position illustrée par la figure 7, le pion 21 a atteint la deuxième extrémité de la gorge 28 et est entièrement hors de la gâche. Le panneau 13 est alors complètement dégagé du plan de la structure fixe et peut être tiré vers la droite, en entraînant l'élément 27 et le coulisseau 25, dans un mouvement de coulissement suivant l'axe du rail, en veillant à maintenir la poignée pressée.

Une position de coulissement intermédiaire est présentée en référence à la figure 8. Le pion 21 est maintenu en contact avec la deuxième extrémité de la gorge sous l'action de la poignée et coulisse dans la rainure 210. Le relâchement de la poignée 29 a pour effet immédiat de libérer le ressort 26 qui va repousser le patin 251 vers la droite en plaquant le pion 21 sur le bord extérieur de la rainure 210. Le panneau 13 est alors immobilisé, et avantageusement maintenu de façon stable dans cette position par la friction du pion sur le bord de la rainure.

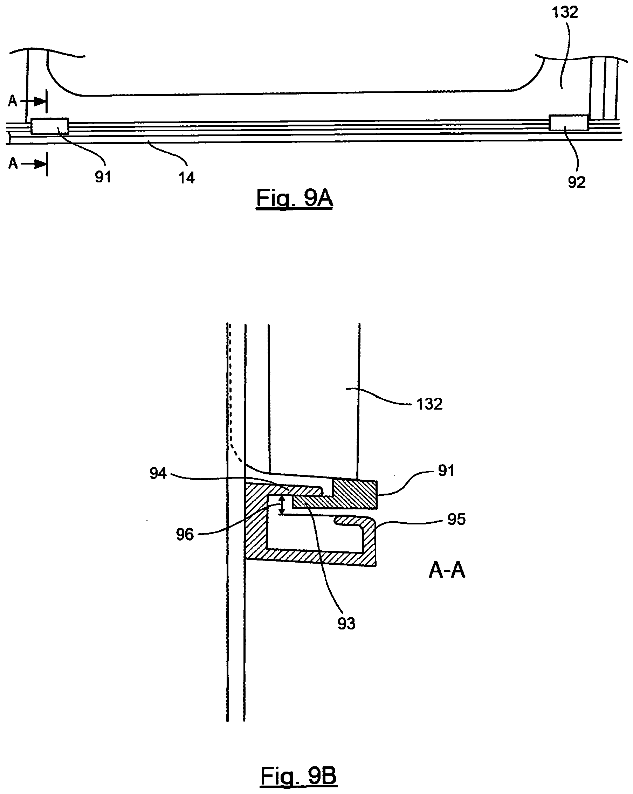

Les figures 9A et 9B illustrent respectivement dans une vue de face et dans une vue en coupe, les moyens de retenue aptes à empêcher le basculement du cadre 132 autour d'un axe perpendiculaire au plan du panneau coulissant 13, lors du coulissement de ce dernier.

Ces moyens de retenue comprennent deux éléments de retenue 91, 92 fixés aux extrémités du bord inférieur du cadre 132, comme illustrés sur la figure 9A. Ces éléments 91, 92 présentent une forme de « L » dont la partie horizontale 93 (voir figure 9B) vient en appui sur la face interne 94 du rail 14. Le rail 14 est conformé pour permettre le passage de la partie 93 des éléments 91, 92 entre le face interne 94 et le bord 95 tourné vers l'intérieur du véhicule. Un jeu fonctionnel 96 est prévu pour limiter le déplacement du panneau 13 vers le bas et ainsi prévenir le basculement, tout en permettant le coulissement des éléments 91, 92.

Dans une variante de ce mode de réalisation, il peut également être prévu un unique élément de retenu s'étendant sur une portion substantielle du bord inférieur du cadre. Dans encore une autre variante de l'invention, il peut être envisagé de munir également le bord supérieur du cadre de moyens de retenue avec le rail supérieur.

### 8. Description d'un autre mode de réalisation particulier

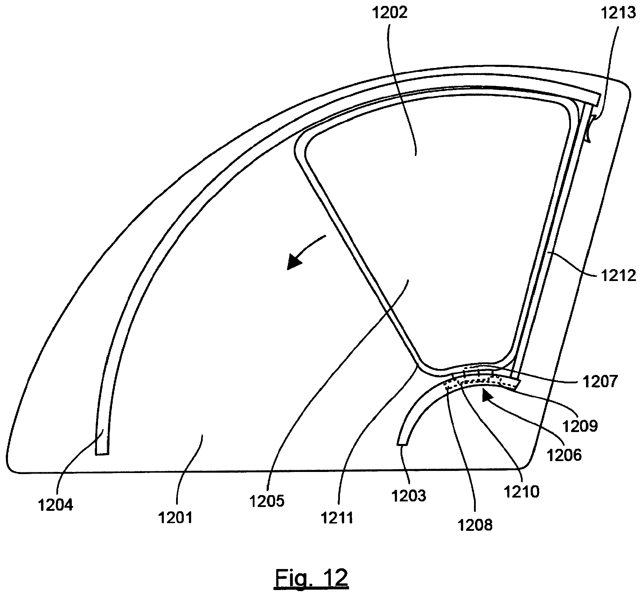

On présente, en référence à la figure 12, un autre mode de réalisation de l'invention (illustré en position d'obturation), dans lequel le panneau fixe 1201, dans lequel est formée une ouverture 1202, est montée sur le véhicule par exemple en remplacement d'une vitre de custode classique.

Ce panneau fixe 1201, dont les bords sont libres de tout cadre, de façon à être solidarisé directement à la carrosserie du véhicule, depuis l'extérieur de celui-ci, par exemple à l'aide d'un joint de colle de la même façon qu'on le ferait pour une vitre fixe.

Comme on le voit sur la figure 12 de l'intérieur du véhicule, ce panneau fixe 1201 porte, vu de l'intérieur du véhicule deux rails de guidage concentriques 1203 et 1204, définissant chacun un arc de cercle.

Ces rails 1203 et 1204 permettent le guidage en pivotement du panneau coulissant 1205, dans le plan de coulissement parallèle au plan défini par le panneau fixe 1201. Ils sont suffisamment éloignés des bords du panneau fixe 1201, pour ne pas interférer avec son collage sur les bords de la carrosserie. Cependant, des éléments de liaison et/ou des éléments d'évacuation d'eau peuvent être associés à ces rails, et se prolonger au-delà du joint de colle, sensiblement jusqu'à un bord du panneau fixe, selon des techniques connues en soi.

Les bords du panneau fixe 1201 sont par ailleurs préférentiellement recouverts d'une sérigraphie, visant à dissimuler, de l'extérieur, les bords de la carrosserie, ainsi que les rails 1203 et 1204.

Le verrouillage et le déplacement en pivotement du panneau coulissant 1205 est assuré de manière manuelle, dans ce mode de réalisation de l'invention. Dans des variantes de ce mode de réalisation, il peut également être prévu de motoriser le verrouillage et le déplacement du panneau coulissant.

La cinématique de ce panneau 1205 comprend d'une part un déplacement en coulissement dans les rails 1203 et 1204, et d'autre part un déplacement de fermeture/ouverture selon un axe sensiblement perpendiculaire au plan de coulissement, pour venir dans une position fermée dans le plan défini par le panneau fixe 1201.

Dans le mode de mode de réalisation illustré, les deux mouvements sont assurés, en partie inférieure, à l'aide d'un coulisseau 1206 formant navette d'un élément de guidage 1207 solidaire du cadre 1211 du panneau coulissant 1205, circulant dans une glissière interne du rail inférieur 1203 entre lesquels est monté un ressort de rappel.

Le coulisseau 1206 est constitué de deux patins 1208 et 1209 reliés par une barre de liaison 1210, et dans lesquels sont formées des gorges de guidage prévues pour recevoir la base de deux pions de guidage (non représentés sur cette figure 12) fixés au bord inférieur du cadre 1211 du panneau 1205. Ces gorges de guidage présentent chacune une portion inclinée d'un angle égal à 45° par rapport à la direction de la glissière interne du rail.

Pour faciliter le coulissement et la rotation du panneau mobile, les deux patins 1208 et 1209, la barre de liaison 1210 et l'élément de guidage 1207 présentent un profil courbe correspondant sensiblement au rayon de courbure du rail 1203.

Dans des variantes de ce mode de réalisation de l'invention, il peut également être envisagé de prévoir des patins et/ou un élément de guidage sensiblement rectilignes, dans le cas où leur longueur reste inférieure à 15% rayon de courbure des rails.

Le panneau coulissant peut être verrouillé en position d'obturation par immobilisation des pions de guidage dans des gâches formées dans le rail 1203.

Une poignée unique 1212, montée mobile par rapport au cadre 1211 et solidaire du patin 1209, coopère avec ce patin pour commander le déplacement du panneau coulissant 1205 et/ou son verrouillage ou son déverrouillage, en modifiant la position relative du coulisseau 1206 et de l'élément de guidage 1207, selon le principe général de l'invention déjà exposé ci-dessus. Cette poignée présente en outre avantageusement une zone de préhension 1213 disposée ergonomiquement sur la partie supérieure de son bord droit, au voisinage du rail 1204, pour permettre aux occupants du véhicule de manoeuvrer le panneau coulissant 1205, en exerçant un effort réduit.

### 9. Autres caractéristiques et avantages de l'invention

D'autres variantes de ce mode de réalisation peuvent bien entendu être envisagées sans sortir du cadre de l'invention.

Ainsi, dans une variante de l'invention, la poignée peut comprendre un cache de masquage de l'espace la séparant du cadre du panneau coulissant.

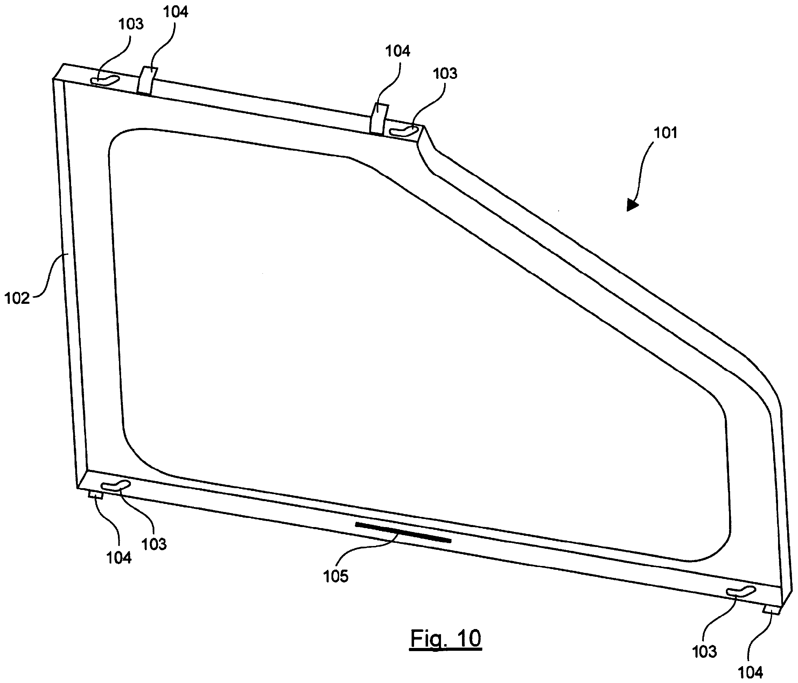

Dans une autre variante de l'invention, illustrée sur la figure 10, la poignée peut définir un second cadre 101 se superposant au cadre du panneau coulissant. Ce second cadre qui présente une forme générale proche de celle du cadre du panneau coulissant, est avantageusement conçu pour intégrer les fonctionnalités de la poignée et des coulisseaux. Il comprend ainsi un bord latéral 102 formant poignée et dans ses parties inférieures et supérieures des lumières 103, sensiblement identiques, incluant une portion rectiligne communiquant avec une portion inclinée, pour le guidage des pions du panneau coulissant. Il comprend également des supports flexibles 104 destinés à permettre au cadre de reposer dans les rails, en écartant ses bords du fond des rails et ainsi rendre les lumières 105 efficaces, et une nervure de guidage rectiligne sur la face supérieure du bord inférieur sur laquelle l'élément solidaire du panneau coulissant est destiné à reposer.

Dans encore une autre variante de l'invention, il peut être prévu de motoriser l'actionnement de la poignée et/ou le déplacement du panneau coulissant. Des moyens d'actionnement motorisés, tels qu'un dispositif à câbles d'entraînement entraînés dans les deux sens de coulissement par un moto-réducteur peuvent ainsi être envisagés.

Dans ce cas, il conviendra de prévoir des gorges d'orientation symétriquement opposée à celles présentées pour le mode de réalisation détaillé précédemment, pour permettre de dégager le panneau coulissant du plan de la structure fixe, et inversement de le replacer dans ce plan, en tirant vers la droite, respectivement poussant vers la gauche, la poignée (disposée dans ce mode de réalisation à gauche de chaque patin inférieur et supérieur), pour ensuite faire coulisser le panneau coulissant vers la droite dans le sens de l'ouverture, respectivement vers la gauche dans le sens de la fermeture, dans un même mouvement de traction du panneau coulissant vers la droite, ou respectivement de poussée vers la gauche.

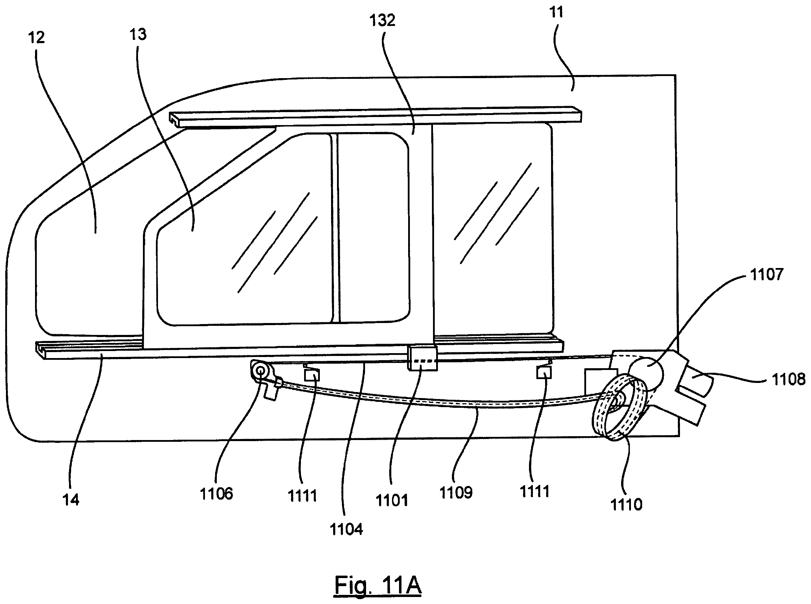

Un exemple de mise en oeuvre d'une motorisation d'un panneau coulissant 13 est présenté en référence à la figure 11A.

Pour déplacer le panneau coulissant 13, un bloc d'entraînement 1101 est fixé au cadre 132 de ce panneau, sous la portion inférieure du cadre 132. Le mouvement du bloc 1101 est commandé par un moto-réducteur 1108, via un câble d'entraînement 1104.

Dans ce mode de réalisation de l'invention, le bloc 1101 est disposé près de l'axe de coulissement, sensiblement à hauteur du rail inférieur 14. Cette disposition permet de limiter la puissance exigée du moto-réducteur et donc corrélativement l'encombrement de ce moto-réducteur. Le bloc 1101 est par ailleurs déporté du plan du panneau coulissant d'une distance au moins égale à la largeur du rail 14, pour ne pas buter sur le rail 14 lors du mouvement du panneau coulissant.

Le câble 1104 se présente sous la forme d'une boucle fermée. Sa portion supérieure est maintenue tendue horizontalement entre une poulie 1106 (fixé sur la structure fixe, à gauche du bloc 1101) et une poulie 1107 montée sur l'arbre d'un moto-réducteur 1108 (fixé sur la structure fixe 11, à droite du bloc 1101). Ainsi, lorsque le câble 1104 est tiré par le moto-réducteur vers la droite ou poussé vers la gauche, celui-ci entraîne le bloc 1101, et donc le panneau coulissant 13, qui accompagnent son mouvement de coulissement.

La portion inférieure de retour de la boucle du câble 1104 est introduite dans une gaine semi-rigide 1109 entre la poulie 1106 et un enrouleur automatique 1110 associé au moto-réducteur pour maintenir en permanence le câble tendu.

Le mouvement de la portion supérieure du câble d'entraînement 1104 vers la gauche ou vers la droite est transmis simplement au bloc 1101, et donc au panneau coulissant 13, par l'intermédiaire d'une bague 1103 sertie sur cette portion du câble d'entraînement 1104, qui est insérée dans une gorge semi-cylindrique 1102 du bloc 1101, de forme complémentaire, et y est maintenue serrée.

D'autre part, le déplacement du panneau coulissant perpendiculairement au plan de la structure fixe, de la position d'obturation à une position de coulissement, après avoir été dégagé du plan de la structure fixe, ou vice-versa, est avantageusement permis par la libération d'une longueur supplémentaire de câble à partir de l'enrouleur automatique 1110, destiné à contrôler la variation de la longueur déroulée de câble.

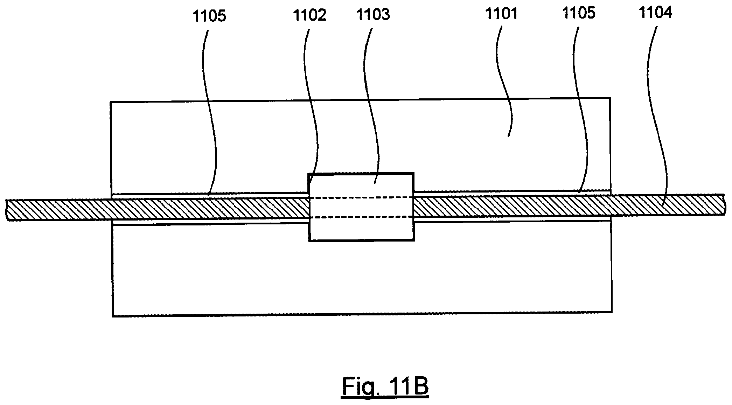

Comme on peut par ailleurs le voir sur la figure 11B, dans une vue de dessous du bloc 1101, ce bloc présente en outre sur toute sa longueur une rainure débouchante 1105 permettant de laisser le passage à la portion supérieure de la boucle du câble 1104, de façon à la maintenir dans ce mode de réalisation sensiblement parallèle à l'axe de coulissement du panneau coulissant et au rail inférieur 14 (c'est-à-dire sensiblement horizontale).

Dans une variante de ce mode de réalisation, il peut également être envisagé de tendre la portion supérieure du câble suivant une direction horizontale inclinée dans le sens angulaire des portions inclinées des gorges du coulisseau, par rapport à la direction de l'axe de coulissement. Cette mesure constructive peut se révéler appropriée pour faciliter le passage de la position d'obturation à la position de coulissement, ou inversement.

Deux limiteurs de course 1111, fonctionnant sur le principe d'un contacteur électrique, permettent de couper l'alimentation électrique du moto-réducteur lorsque le panneau coulissant atteint une position extrême d'ouverture (limiteur droite), ou de fermeture (limiteur gauche). Ainsi, le moto-réducteur ne force pas lorsque le panneau coulissant vient en butée en position d'obturation ou en position maximale d'ouverture.

Dans une variante de ce mode de réalisation, on peut également prévoir des moyens électroniques et/ou des moyens de détection d'une surintensité de la valeur du couple demandé pour couper l'alimentation électrique du moto-réducteur lorsque le panneau coulissant atteint l'une ou l'autre des positions de coulissement extrêmes (position d'obturation et position d'ouverture complète).

Dans encore un autre mode de réalisation de l'invention, il peut également être envisagé de munir le bord supérieur de l'ouverture ménagée dans le dispositif d'obturation selon l'invention, de moyens de détection électroniques et ou de prévoir un joint de forme adaptée pour détecter la présence d'un doigt, d'un objet... dans l'ouverture lorsque la fermeture automatique de l'ouverture par le panneau coulissant motorisé est actionnée. Ceci peut notamment prévenir les risques qu'un occupant du véhicule, et notamment un enfant, se pince un ou plusieurs doigts entre le cadre du panneau coulissant et un bord de l'ouverture, lorsque le panneau coulissant se replace automatiquement dans la position d'obturation.

## Revendications

1. Dispositif d'obturation d'une baie ménagée dans la carrosserie d'un véhicule automobile, comprenant une structure fixe (11) dans laquelle est définie une ouverture (12), et au moins un panneau coulissant (13) présentant un cadre (132) portant au moins deux pions de guidage (21, 22), ledit panneau coulissant (13) étant mobile par rapport à ladite structure fixe (11) entre :
- une position d'obturation de ladite ouverture (12), dans le plan formé par ladite structure fixe (11) ; et
- une position de coulissement, dans un plan de coulissement sensiblement parallèle audit plan formé par ladite structure fixe (11), le panneau coulissant (13) étant déplacé en restant en permanence parallèle à ce plan,
ladite structure fixe (11) portant, sur sa face tournée vers l'intérieur dudit véhicule, au moins un rail de guidage (14) dudit panneau coulissant (13), définissant un axe de coulissement, et dans lequel est logé au moins un coulisseau (25) présentant une gorge de guidage (28) pour chacun desdits pions de guidage (21, 22), lesdites gorges de guidage (28) étant sensiblement identiques et présentant une portion inclinée formant un angle compris entre 1 et 89° avec ledit axe de coulissement,
ledit rail (14) comprenant au moins une gâche de verrouillage (23), apte à coopérer avec un desdits pions de guidage (21, 22) dans ladite position d'obturation pour assurer le verrouillage du panneau coulissant (13),
ledit dispositif étant **caractérisé en ce qu'**il comprend :
- un élément de guidage (27) solidaire dudit panneau coulissant (13), le coulisseau (25) et l'élément de guidage (27) étant guidés dans un desdits rails (14) de guidage, l'élément de guidage (27) étant mobile par rapport au cadre (132) du panneau coulissant (13) suivant une direction perpendiculaire au plan du panneau coulissant (13) ; et
- des moyens de rappel destinés à contrôler un mouvement relatif du ou desdits coulisseaux (25, 31) par rapport audit élément de guidage (27) suivant ledit axe de coulissement,
de façon à permettre un déplacement dudit panneau coulissant (13) suivant une direction perpendiculaire au plan de ladite structure fixe (11).

2. Dispositif d'obturation selon la revendication 1, **caractérisé en ce que** ledit élément de guidage (27) chevauche au moins une partie dudit coulisseau (25).

3. Dispositif d'obturation selon l'une quelconque des revendications 1 ou 2, **caractérisé en ce que** lesdits moyens de rappel comprennent un ressort hélicoïdal (26) monté entre ledit élément de guidage et ledit coulisseau (25) et s'étendant parallèlement audit axe de coulissement.

4. Dispositif d'obturation selon l'une quelconque des revendications 1 à 3, **caractérisé en ce qu'**il comprend une poignée (29) solidaire du ou desdits coulisseaux (25, 31), et mobile par rapport audit cadre (132).

5. Dispositif d'obturation selon la revendication 4, **caractérisé en ce que** ladite poignée (29) est mobile dans une direction parallèle audit axe de coulissement.

6. Dispositif d'obturation selon l'une quelconque des revendications 4 et 5, **caractérisé en ce que** ladite poignée (29) relie un coulisseau supérieur (25), mobile dans un rail de guidage supérieur (15), et un coulisseau inférieur (31), mobile dans un rail inférieur (14).

7. Dispositif d'obturation selon l'une quelconque des revendications 4 à 6, **caractérisé en ce que** lesdits pions de guidage (21, 22) n'étant pas logés dans lesdites gâches (23, 24), lesdits pions de guidage (21, 22) viennent frotter contre un bord dudit rail (14) lorsque la poignée (29) n'est pas actionnée.

8. Dispositif d'obturation selon l'une quelconque des revendications 4 à 7, **caractérisé en ce que** ladite poignée (29) comprend un cache de masquage de l'espace entre ladite poignée (29) et ledit cadre (132) dudit panneau coulissant (13).

9. Dispositif d'obturation selon la revendication 8, **caractérisé en ce que** ladite poignée (29) et ledit ou lesdits coulisseaux (25, 31) définissent un second cadre (101) superposé audit cadre (132).

10. Dispositif d'obturation selon la revendication 9, **caractérisé en ce que** ledit second cadre (101) comprend au moins une lumière (103) associée à chacun desdits pions de guidage (21, 22) de façon à permettre d'entraîner le panneau coulissant (13) suivant une direction perpendiculaire au plan de ladite structure fixe (11), et des moyens de solidarisation avec ledit élément de guidage.

11. Dispositif d'obturation selon l'une quelconque des revendications 1 à 3, **caractérisé en ce qu'**il comprend des moyens de motorisation dudit panneau coulissant (13).

12. Dispositif d'obturation selon la revendication 11, **caractérisé en ce que** lesdits moyens de motorisation comprennent un câble (1104), solidaire d'au moins un bord dudit cadre (132) et actionné par un moto-réducteur (1108), une portion dudit câble étant sensiblement parallèle audit axe de coulissement, et des moyens de contrôle de la variation (1110) de la longueur déroulée dudit câble (1104).

13. Dispositif d'obturation selon l'une quelconque des revendications 1 à 12, **caractérisé en ce que** ledit cadre (132) comprend au moins un élément de retenue apte à venir en appui sur une face interne dudit rail (14) de façon à empêcher le basculement dudit cadre (132) autour d'un axe perpendiculaire au plan dudit panneau coulissant (13).

14. Dispositif d'obturation selon l'une quelconque des revendications 1 à 13, **caractérisé en ce que** le ou lesdits rails définissent un arc de cercle, de façon que ledit panneau coulissant (13) se déplace en pivotement.

15. Véhicule automobile présentant une baie ménagée dans sa carrosserie **caractérisé en ce qu'**il comprend au moins un dispositif d'obturation selon l'une des revendications 1 à 14, ledit dispositif d'obturation comprenant :
- une structure fixe (11) dans laquelle est définie une ouverture (12) ;
- au moins un panneau coulissant (13) présentant un cadre (132) portant au moins deux pions de guidage (21, 22), mobile par rapport à ladite structure fixe (11) entre :
- une position d'obturation de ladite ouverture (12), dans le plan formé par ladite structure fixe (11); et
- une position de coulissement, dans un plan de coulissement sensiblement parallèle audit plan formé par ladite structure fixe (11),
ladite structure fixe (11) portant, sur sa face tournée vers l'intérieur dudit véhicule, au moins un rail de guidage (14) dudit panneau coulissant, définissant un axe de coulissement, ledit rail (14) comprenant au moins une gâche de verrouillage (23), apte à coopérer avec un desdits pions de guidage (21, 22) dans ladite position d'obturation pour assurer le verrouillage du panneau coulissant (13) ;
- au moins un coulisseau (25) présentant une gorge de guidage (28) pour chacun desdits pions de guidage (21, 22), lesdites gorges de guidage (28) étant sensiblement identiques et présentant une portion inclinée formant un angle compris entre 1 et 89° avec ledit axe de coulissement ;
- un élément de guidage (27) solidaire dudit panneau coulissant (13), guidés dans un desdits rails (14) de guidage, l'élément de guidage (27) étant mobile par rapport au cadre (132) du panneau coulissant (13) suivant une direction perpendiculaire au plan du panneau coulissant (13) ; et
- des moyens de rappel destinés à contrôler un mouvement relatif du ou desdits coulisseaux (25, 31) par rapport audit élément de guidage (1207) suivant ledit axe de coulissement,
de façon à permettre un déplacement dudit panneau coulissant (13) suivant une direction perpendiculaire au plan de ladite structure fixe (11).

## Patentansprüche

1. Vorrichtung zum Verschließen einer Öffnung, die in der Karosserie eines Automobilfahrzeugs aufgenommen ist, umfassend eine feste Struktur (11), in der eine Öffnung (12) definiert ist, und mindestens eine gleitende Platte (13) mit einem Rahmen (132), der mindestens zwei Führungsstifte (21, 22) trägt, wobei die gleitende Platte (13) in Bezug auf die feste Struktur (11) bewegbar ist zwischen:
- einer Verschlussposition der Öffnung (12), in der Ebene, die von der festen Struktur (11) gebildet wird; und
- einer Gleitposition, in einer Gleitebene im Wesentlichen parallel zu der Ebene, die von der festen Struktur (11) gebildet wird,
wobei die gleitende Platte (13) verschoben wird, indem sie ständig parallel zu dieser Ebene bleibt,
wobei die feste Struktur (11), auf ihrer dem Fahrzeuginneren zugewandten Seite, mindestens eine Führungsschiene (14) der gleitenden Platte (13) trägt, die eine Gleitachse definiert, und in der mindestens ein Schlitten (25) mit einem Führungshals (28) für jeden der Führungsstifte (21, 22) angeordnet ist, wobei die Führungshälse (28) im Wesentlichen identisch sind und einen geneigten Abschnitt aufweisen, der einen Winkel zwischen 1 und 89° mit der Gleitachse bildet,
wobei die Schiene (14) mindestens einen Verriegelungshaken (23) umfasst, der geeignet ist, mit einem der Führungsstifte (21, 22) in der Verschlussposition zusammenzuwirken, um die Verriegelung der gleitenden Platte (13) sicherzustellen,
wobei die Vorrichtung **dadurch gekennzeichnet ist, dass** diese umfasst:
- ein Führungselement (27), das mit der gleitenden Platte (13) fest verbunden ist, wobei der Schlitten (25) und das Führungselement (27) in einer der Führungsschienen (14) geführt werden, wobei das Führungselement (27) in Bezug auf den Rahmen (132) der gleitenden Platte (13) in einer Richtung rechtwinklig zu der Ebene der gleitenden Platte (13) bewegbar ist; und
- Rückholmittel, die dazu bestimmt sind, eine relative Bewegung des oder der Schlitten (25, 31) in Bezug auf das Führungselement (27) in der Gleitachse zu steuern,
um eine Verschiebung der gleitenden Platte (13) in einer Richtung rechtwinklig zu der Ebene der festen Struktur (11) zu gestatten.

2. Verschlussvorrichtung nach Anspruch 1, **dadurch gekennzeichnet, dass** das Führungselement (27) mindestens einen Teil des Schlittens (25) überlappt.

3. Verschlussvorrichtung nach einem der Ansprüche 1 oder 2, **dadurch gekennzeichnet, dass** die Rückholmittel eine Schraubenfeder (26) umfassen, die zwischen dem Führungselement und dem Schlitten (25) montiert ist und sich parallel zu der Gleitachse erstreckt.

4. Verschlussvorrichtung nach einem der Ansprüche 1 bis 3, **dadurch gekennzeichnet, dass** diese einen Griff (29) umfasst, der mit dem oder den Schlitten (25, 31) fest verbunden und in Bezug auf den Rahmen (132) bewegbar ist.

5. Verschlussvorrichtung nach Anspruch 4, **dadurch gekennzeichnet, dass** der Griff (29) in einer Richtung parallel zu der Gleitachse bewegbar ist.

6. Verschlussvorrichtung nach einem der Ansprüche 4 und 5, **dadurch gekennzeichnet, dass** der Griff (29) einen oberen Schlitten (25), der in einer oberen Führungsschiene (15) bewegbar ist, und einen unteren Schlitten (31), der in einer unteren Schiene (14) bewegbar ist, verbindet.

7. Verschlussvorrichtung nach einem der Ansprüche 4 bis 6, **dadurch gekennzeichnet, dass**, wenn die Führungsstifte (21, 22) nicht in den Haken (23, 24) aufgenommen werden, die Führungsstifte (21, 22) gegen einen Rand der Schiene (14) reiben, wenn der Griff (29) nicht betätigt wird.

8. Verschlussvorrichtung nach einem der Ansprüche 4 bis 7, **dadurch gekennzeichnet, dass** der Griff (29) eine Abdeckkappe des Raums zwischen dem Griff (29) und dem Rahmen (132) der gleitenden Platte (13) umfasst.

9. Verschlussvorrichtung nach Anspruch 8, **dadurch gekennzeichnet, dass** der Griff (29) und der oder die Schlitten (25, 31) einen zweiten Rahmen (101) definieren, der über dem Rahmen (132) liegt.

10. Verschlussvorrichtung nach Anspruch 9, **dadurch gekennzeichnet, dass** der zweite Rahmen (101) mindestens ein Langloch (103), das mit jedem der Führungsstifte (21, 22) assoziiert ist, um zu gestatten, die gleitende Platte (13) in einer Richtung rechtwinklig zu der Ebene der festen Struktur (11) mitzuführen, und Mittel zur festen Verbindung mit dem Führungselement umfasst.

11. Verschlussvorrichtung nach einem der Ansprüche 1 bis 3, **dadurch gekennzeichnet, dass** diese die Motorisierung der gleitenden Platte (13) umfasst.

12. Verschlussvorrichtung nach Anspruch 11, **dadurch gekennzeichnet, dass** die Motorisierungsmittel ein Kabel (1104), das mit mindestens einem Rand des Rahmens (132) fest verbunden ist und von einem Getriebemotor (1108) betätigt wird, wobei ein Abschnitt des Kabels im Wesentlichen parallel zu der Gleitachse ist, und Mittel (1110) zum Steuern der Variation der abgewickelten Länge des Kabels (1104) umfassen.

13. Verschlussvorrichtung nach einem der Ansprüche 1 bis 12, **dadurch gekennzeichnet, dass** der Rahmen (132) mindestens ein Halteelement umfasst, das geeignet ist, gegen eine Innenfläche der Schiene (14) anzuliegen, um ein Kippen des Rahmens (132) um eine Achse rechtwinklig zu der Ebene der gleitenden Platte (13) zu verhindern.

14. Verschlussvorrichtung nach einem der Ansprüche 1 bis 13, **dadurch gekennzeichnet, dass** die Schiene oder Schienen einen Kreisbogen definieren, damit sich die gleitende Platte (13) durch Verschwenken verschiebt.

15. Automobilfahrzeug mit einer Öffnung, die in seiner Karosserie aufgenommen ist, **dadurch gekennzeichnet, dass** dieses mindestens eine Verschlussvorrichtung nach einem der Ansprüche 1 bis 14 umfasst, wobei die Verschlussvorrichtung umfasst:
- eine feste Struktur (11), in der eine Öffnung (12) definiert ist;
- mindestens eine gleitende Platte (13) mit einem mindestens zwei Führungsstifte (21, 22) tragenden Rahmen (132), die in Bezug auf die feste Struktur (11) bewegbar ist zwischen:
- einer Verschlussposition der Öffnung (12), in der Ebene, die von der festen Struktur (11) gebildet wird; und
- einer Gleitposition, in einer Gleitebene im Wesentlichen parallel zu der Ebene, die von der festen Struktur (11) gebildet wird,
wobei die feste Struktur (11), auf ihrer dem Fahrzeuginneren zugewandten Seite, mindestens eine Führungsschiene (14) der gleitenden Platte trägt, die eine Gleitachse definiert, wobei die Schiene (14) mindestens einen Verriegelungshaken (23) umfasst, der geeignet ist, mit den Führungsstiften (21, 22) in der Verschlussposition zusammenzuwirken, um die Verriegelung der gleitenden Platte (13) sicherzustellen;
- mindestens einen Schlitten (25) mit einem Führungshals (28) für jeden der Führungsstifte (21, 22), wobei die Führungshälse (28) im Wesentlichen identisch sind und einen geneigten Abschnitt aufweisen, der einen Winkel zwischen 1 und 89° mit der Gleitachse bildet;
- ein Führungselement (27), das mit der gleitenden Platte (13) fest verbunden ist, die in einer der Führungsschienen (14) geführt werden, wobei das Führungselement (27) in Bezug auf den Rahmen (132) der gleitenden Platte (13) in einer Richtung rechtwinklig zu der Ebene der gleitenden Platte (13) bewegbar ist; und
- Rückholmittel, die dazu bestimmt sind, eine relative Bewegung des oder der Schlitten (25, 31) in Bezug auf das Führungselement (1207) in der Gleitachse zu steuern,
um eine Verschiebung der gleitenden Platte (13) in einer Richtung rechtwinklig zu der Ebene der festen Struktur (11) zu gestatten.

## Claims

1. Device for closing off an opening formed in the bodywork of an automobile vehicle, comprising a fixed structure (11) wherein is defined an aperture (12), and at least one sliding panel (13) having a surround (132) bearing at least two guiding pegs (21, 22), mobile in relation to said fixed structure (11) between:
- a closing off position of said aperture (12), in the plane formed by said fixed structure (11); and
- a sliding position, in a plane of sliding substantially parallel to said plane formed by said fixed structure (11), said sliding panel (13) being moved by remaining permanently parallel to this plane,
said fixed structure (11) bearing, on its face turned towards the interior of said vehicle, at least one guide rail (14) of said sliding panel (13), defining an axis of sliding, and in which is housed at least one slide (25) having a guiding groove (28) to accept each of said guiding pegs (21, 22), said guiding grooves (28) being substantially identical and having an inclined portion forming an angle between 1 and 89° with said axis of sliding;
said rail (14) comprises at least one locking strike plate (23), able to cooperate with one of said guiding pegs (21,22) in said closing off position, in such a way as to lock said sliding panel (13),
said device being **characterised in that** it comprises:
- a guide element (27) fastened to said sliding panel (13), said slide (25) and said guide element (27) being guided in one of said guide rails (14), said guide element (27) being movable relative to the surround (132) of the sliding panel (13) according to a direction perpendicular to the plane of the sliding panel (13); and
- return means intended for controlling a relative movement of said slide(s) (25, 31) in relation to said guide element (27) according to said axis of sliding,
in such a way as to allow for a displacement of said sliding panel (13) according to a direction perpendicular to the plane of said fixed structure (11).

2. Device for closing off according to claim 1, **characterised in that** said guide element (27) overlaps at least one portion of said slide (25).

3. Device for closing off according to any of claims 1 or 2, **characterised in that** said return means include a coiled spring (26) mounted between said guide element and said slide (25) and extending in parallel to said axis of sliding.

4. Device for closing off according to any of claims 1 to 3, **characterised in that** it comprises a handle (29) fastened to said slide (s) (25, 31), and mobile in relation to said surround (132).

5. Device for closing off according to claim 4, **characterised in that** said handle (29) is mobile in a direction parallel to said axis of sliding.

6. Device for closing off according to any of claims 4 and 5, **characterised in that** said handle (29) connects an upper slide (25), mobile in an upper guide rail (15), and a lower slide (31), mobile in a lower rail (14).

7. Device for closing off according to any of claims 4 to 6, **characterised in that** as said guiding pegs (21, 22) are not housed in said strike plates (23, 24), said guiding pegs (21, 22) rub against an edge of said rail (14) when the handle (29) is not actuated.

8. Device for closing off according to any of claims 4 to 7, **characterised in that** said handle (29) comprises a masking cover for the space between said handle (29) and said surround (132) of said sliding panel (13).

9. Device for closing off according to claim 8, **characterised in that** said handle (29) and said or said slides (25, 31) define a second surround (101) superimposed on said surround (132).

10. Device for closing off according to claim 9, **characterised in that** said second surround (101) comprises at least one hole (103) associated to each of said guiding pegs (21, 22) in such a way as to allow for the driving of the sliding panel (13) according to a direction perpendicular to the plane of said fixed structure (11), and means for fastening with said guide element.

11. Device for closing off according to any of claims 1 to 3, **characterised in that** it comprises motorising means of said sliding panel (13).

12. Device for closing off according to claim 11, **characterised in that** said means of motorising include a cable (1104), fastened to at least one edge of said surround (132) and actuated by a gear motor (1108), a portion of said cable being substantially parallel to said axis of sliding, and means of controlling the variation (1110) of the unwound length of said cable (1104).

13. Device for closing off according to any of claims 1 to 12, **characterised in that** said surround (132) comprises at least one retaining element able to bear against an internal face of said rail (14) in such a way as to prevent the tilting of said surround (132) around an axis perpendicular to the plane of said sliding panel (13).

14. Device for closing off according to any of claims 1 to 13, **characterised in that** the said rail(s) define an arc of a circle, in such a way that said sliding panel (13) is displaced by pivoting.

15. Automobile vehicle having an opening formed in its bodywork **characterised in that** it comprises at least one device for closing off according to one of claims 1 to 14, said device for closing off comprising:
- a fixed structure (11) wherein is defined an aperture (12);
- at least one sliding panel (13) having a surround (132) bearing at least two guiding pegs (21, 22), mobile in relation to said fixed structure (11) between:
-- a closing off position of said aperture (12), in the plane formed by said fixed structure (11); and
-- a position of sliding, in a plane of sliding substantially parallel to said plane formed by said fixed structure (11),
said fixed structure (11) bearing, on its face turned towards the interior of said vehicle, at least one guide rail (14) of said sliding panel, defining an axis of sliding, said rail (14) comprising at least one locking strike plate (23), able to cooperate with one of said guiding pegs (21,22) in said closing off position, in such a way as to lock said sliding panel (13) ;
- at least one slide (25) having a groove to accept each of said guiding pegs (21,22), said grooves being substantially identical and having an inclined portion forming an angle between 1 and 89° with said axis of sliding;
- a guide element (27) fastened to said sliding panel (13), guided in one of said guide rails (14), said guide element (27) being movable relative to the surround (132) of the sliding panel (13) according to a direction perpendicular to the plane of the sliding panel (13); and
- return means intended for controlling a relative movement of said slide(s) (25, 31) in relation to said guide element according to said axis of sliding,
in such a way as to allow for a displacement of said sliding panel (13) according to a direction perpendicular to the plane of said fixed structure (11).
